# EUROPÄISCHE PATENTSCHRIFT

(11) **EP 1 738 661 B1**
(45) Veröffentlichungstag und Bekanntmachung des Hinweises auf die Patenterteilung: **01.09.2010**
(21) Anmeldenummer: 05014035.9
(22) Anmeldetag: 29.06.2005
(51) Int. Cl.: A23N 17/00

(54) **Verfahren zur Herstellung von Zwischenfutterprodukten und /oder Mischfutterfertigprodukten für Tiere sowie Vorrichtung dafür**
Process for the manufacture of intermediate animal food products and/or animal food mixtures and device therefor
Procédé de fabrication de produits alimentaires intermédiaires et/ou de mélanges alimentaires pour animaux et dispositif correspondant

(43) Veröffentlichungstag der Anmeldung: 03.01.2007
(73) Patentinhaber: Deutsche Tiernahrung Cremer GmbH & Co. KG, 40221 Düsseldorf (DE)
(72) Erfinder: Arning, Ulrich, 40882 Ratingen-Homberg (DE); Hötger, Siegfried, 48317 Drensteinfurt (DE)
(74) Vertreter: Stenger, Watzke & Ring

(56) Entgegenhaltungen:
- EP-A- 0 308 529
- EP-A- 0 537 110
- DE-A1- 2 445 937
- GB-A- 2 293 747
- GB-A- 191 423 655
- US-A- 2 770 543
- US-A- 3 284 211

## Beschreibung

Die Erfindung betrifft ein Verfahren, gemäß den beigefügten Ansprüchen 1 bis 6, zur Herstellung von Zwischenfutterprodukten und/oder Mischfutterfertigprodukten für Tiere, bei dem mittels Sattdampf vorkonditionierte Ausgangsstoffe zu schüttfähigen Gütern, vorzugsweise Pellets, gepreßt und anschließend die schüttfähigen Güter abgekühlt werden. Des weiteren betrifft die Erfindung eine Vorrichtung zur Durchführung des Verfahrens, gemäß den beigefügten Ansprüchen 7 bis 10.

Die Herstellung von Zwischenfutterprodukten und/oder Mischfutterfertigprodukten für Tiere, insbesondere in Form von Futtermittelgranulat, erfolgt in der Praxis üblicherweise unter Verwendung sogenannter Pelletieranlagen. Derartige Pelletieranlagen umfassen einen Konditionierer, gegebenenfalls eine Vorverdichterpresse, eine Pelletierpresse, eine Kühleinrichtung, gegebenenfalls eine Granulierstation, beispielsweise in Form eines Walzenstuhls, einer Absiebung sowie gegebenenfalls eine Nachbefettungsanlage.

Zur Herstellung des Futtermittelgranulats werden dem Konditionierer die Ausgangsstoffe in Form von Mehl, vorzugsweise aus einer Pressemehlzelle aufgegeben. Die Ausgangsstoffe werden im Konditionierer mit Dampf und/oder Flüssigkeiten beaufschlagt, um die die Pelletierfähigkeit der Produkte zu verbessern. Die vorkonditionierten Ausgangsstoffe gelangen über eine Vorverdichterpresse oder alternativ direkt in eine Pelletierpresse, wo sie zu Pellets, also schüttfähigen Gütern verpreßt werden. Infolge der Dampfbeaufschlagung im Konditionierer und der in der Pelletierpresse durchgeführten Verpressung weisen die die Pelletierpresse verlassenden Pellets eine Kemtemperatur von 50°C bis 120°C auf.

Da die Produkte nach diesem Prozeß aufgrund ihrer Temperatur und zum Teil auch ihrer Feuchtigkeit nicht direkt lagerfähig sind, werden sie in einer nachgeschalteten Kühleinrichtung gekühlt und als Nebeneffekt geringfügig getrocknet. Im Anschluß an die Kühlung können die gekühlten Pellets wahlweise zu Granulat weiterverarbeitet werden. Je nach Produktanforderungen werden die Pellets vor dem Kühlprozeß in einem vorgeschalteten Prozeßschritt gegebenenfalls gefettet und anschließend gekühlt. Eine alternative Herstellung von gefetteten Pellets besteht darin, daß die Pellets nach dem Kühlprozeß in einem Behälter aufgewärmt werden, in dem zum Zwecke der Aufwärmung heiße Luft durch die Pellets gedrückt wird. Die Erwärmung der Pellets dient in dem dann anschließenden Verfahrensschritt dazu, das Aufbringen von Fett zu begünstigen.

In der GB 23 655 A.D. 1914 und der US 2 770 543 werden Verfahren und Anordnungen zur Herstellung von Zwischenfutterprodukten beschrieben.

Wie die Erfahrung zeigt, sollte der Höchstwert für die Feuchtigkeit von Tierfutter 14 % nicht übersteigen, um eine gute Lagerfähigkeit des Tierfutters ohne die Gefahr von Qualitätsminderungen gewährleisten zu können. Aus diesem Grunde werden die noch heißen, die Pelletierpresse verlassenden Pellets in einer der Pelletierpresse nachgeschalteten Trocknungseinrichtung getrocknet. Im Anschluß an die Trocknung können die getrockneten Pellets wahlweise zu Granulat weiterverarbeitet werden.

Als Kühleinrichtung dienen in der Regel entsprechend ausgerüstete Gegenstrom-, Schacht-, Trommel- und Fließbettapparate. In der Kühleinrichtung werden die zu kühlenden Pellets unmittelbar, d.h. direkt von Gas, vorzugsweise Luft, als Kühlmedium umströmt. Infolge der Abkühlung geben die Pellets Wasser in Form von Wasserdampf ab, der vom Kühlmedium aufgenommen und abtransportiert wird. In der Praxis hat sich diese Art der Kühlung bewährt, obgleich sie nicht frei von Nachteilen ist.

So ist es von Nachteil, daß die als Kühlmedium eingesetzten Gase, vorzugsweise Luft, eine nur geringe Wärmekapazität aufweisen, was verhältnismäßig große Volumenströme erforderlich macht. Dies führt zu einem hohen Energieverbrauch sowie zu einer aufwendigen Gesamtinstallation mit großem Raumbedarf, da zusätzliche Apparate zur Reinigung des Gasstromes notwendig sind. Darüber hinaus wird die Geruchsbelästigung durch die die Kühleinrichtung verlassenden Abgase als nachteilig empfunden, weshalb es erforderlich ist, entsprechende Filterungseinrichtungen vorzusehen. Bei der Verwendung von Außenluft als Kühlmedium kann es an heißen Sommertagen zudem dazu kommen, daß aufgrund der verhältnismäßig hohen Lufttemperatur in Verbindung mit der ohnehin schlechten Wärmekapazität von Luft die angestrebte Abkühlung der Pellets auf einen Temperaturbereich von ca. 20°C nicht möglich ist.

Zur Vermeidung der vorgenannten Nachteile ist es ausgehend vom Vorbeschriebenen die Aufgabe der Erfindung, ein hinsichtlich der Kühlungsstufe verbessertes Verfahren zur Herstellung von Zwischenfutterprodukten und/oder Mischfutterfertigprodukten für Tiere anzugeben. Zudem soll eine Vorrichtung zur Durchführung eines solchen Verfahrens vorgeschlagen werden.

Verfahrensseitig bzw. vorrichtungsseitig wird zur Lösung der Erfindung vorgeschlagen, daß die schüttfähigen Güter zwecks Abkühlung durch einen vorzugsweise im Kreuz-Gegenstrom betriebenen Rohrbündelwärmetauscher geführt werden, wobei die Rohre des Rohrbündelwärmetauschers im Gegenstrom mit Gas, vorzugsweise Luft, beaufschlagt werden.

Die Abkühlung der schüttfähigen Güter, das heißt der Pellets, und damit auch die Trocknung derselben erfolgt erfindungsgemäß auf indirektem Wege. Die schüttfähigen Güter werden zu diesem Zweck durch einen Rohrbündelwärmetauscher geführt. Dieser wird vorzugsweise im Kreuz-Gegenstrom mit einem Kühlmedium betrieben, welches beispielsweise Wasser, ein alternatives flüssiges Medium oder Gas sein kann.

Die durch den Rohrbündelwärmetauscher geführten schüttfähigen Güter werden im Rohrbündelwärmetauscher abgekühlt. Die zu Beginn des Abkühlvorganges noch heißen schüttfähigen Güter geben infolge der Abkühlung Wasserdampf ab, wodurch auch ein Trocknungseffekt einsetzt.

Um den aus den schüttfähigen Gütern (z. B. heiße Pellets) während der ersten Abkühlphase austretenden Wasserdampf (Flash-Effekt) abzuführen, werden die Rohre des Rohrbündelwärmetauschers im Gegenstrom mit Gas, vorzugsweise Luft beaufschlagt. Dieses im Gegenstrom durch die Rohre des Rohrbündelwärmetauschers strömende Gas nimmt den während des Abkühlvorganges der schüttfähigen Güter entstehenden Wasserdampf auf und transportiert diesen ab. Im Ergebnis stellen sich abgekühlte und getrocknete schüttfähige Güter, das heißt Pellets ein.

Der Rohrbündelwärmetauscher zeichnet sich durch eine besonders effiziente Wärmeübertragung aus. Die vorzugsweise dichte Packung der Rohre des Rohrbündelwärmetauschers führt zu höchsten spezifischen Wärmeübertragungsflächen, so daß die in den Rohrbündelwärmetauscher eingeführten schüttfähigen Güter schnell und effizient gekühlt werden. Über den Umfang eines jeden Rohres des Rohrbündelwärmetauschers fließt die von den schüttfähigen Gütern abgegebene Wärme radial nach allen Seiten ab. Damit wird eine gleichmäßige Wirkung über den gesamten Querschnitt und eine effiziente Ausnutzung der Bauhöhe des Rohrbündelwärmetauschers gewährleistet.

Der Einsatz eines Rohrbündelwärmetauschers ermöglicht im Unterschied zum direkten Kühlungsverfahren den Einsatz von Wasser als Kühlmedium. Wasser hat gegenüber Gas eine bessere Wärmekapazität, so daß unter Verwendung eines Rohrbündelwärmetauschers bessere Abkühlwerte erreicht werden können als bei den aus dem Stand der Technik vorbekannten direkten Kühlungsverfahren.

Zum Abtransport des infolge der Abkühlung der schüttfähigen Güter entstehenden Wasserdampfes wird, wie vorstehend beschrieben, ein Trägergas, vorzugsweise Luft, verwendet, das im Gegenstrom durch die Rohre des Rohrbündelwärmetauschers geführt wird. Dabei nimmt das Trägergas nicht nur den infolge der Abkühlung entstehenden Wasserdampf auf, sondern auch den infolge der Abtrocknung der schüttfähigen Güter entstehenden Staub. Nach Austritt des Trägergases aus dem Rohrbündelwärmetauscher ist dieses zu reinigen bzw. zu entfeuchten. Im Unterschied zum direkten Kühlungsverfahren bedarf es allerdings eines weitaus geringeren Volumenstroms bezüglich des mit den schüttfähigen Gütern im Zuge der Abführung der Luft/Dampfphase in direkten Kontakt kommenden Trägergases. Gegenüber den aus dem Stand der Technik bekannten Verfahren vermindert sich deshalb der apparative Aufwand und der Reinigungsvorgang des als Abluft aus dem Rohrbündelwärmetauscher austretenden Trägergases vereinfacht sich.

Das erfindungsgemäße Verfahren nutzt also einerseits die Vorteile des direkten Kühlungsverfahrens, andererseits können die damit einhergehenden Nachteile vermieden werden. Dies wird erfindungsgemäß dadurch erreicht, daß der Kühlkreislauf des Rohrbündelwärmetauschers vom Gasstrom, der die während der Kühlung entstehenden Stäube bzw. den während der Kühlung entstehenden Wasserdampf aufnimmt und abtransportiert, entkoppelt ist. Anders als beim direkten Kühlungsverfahren dient beim erfindungsgemäßen Verfahren das in die Rohre des Rohrbündelwärmetauschers im Gegenstrom eingeleitete Gas nur der Aufnahme und dem Abtransport der während des Abkühlvorganges entstehenden Stäube bzw. des entstehenden Wasserdampfes. Die Abkühlung der schüttfähigen Güter erfolgt indes durch das Kühlmedium, welches vorzugsweise im Kreuz-Gegenstrom durch den Rohrbündelwärmetauscher geführt wird.

Das erfindungsgemäße Verfahren kann unabhängig von der Temperatur der Außenluft betrieben werden, weshalb es auch an heißen Sommertagen nicht störanfällig ist. Zudem kann die Geruchsbelästigung reduziert werden, da im Vergleich zum direkten Kühlungsverfahren weniger geruchsbelastete Abgase entstehen.

Das im Gegenstrom durch die Rohre des Rohrbündelwärmetauschers geführte Gas wird nach einem Verlassen des Rohrbündelwärmetauschers entfeuchtet und/oder gereinigt, vorzugsweise entstaubt. Die dabei dem Gas im Zuge der Reinigung entnommenen Feststoffpartikel, beispielsweise Staubpartikel, können dem Verfahrenszyklus durch Beimischung zu den Ausgangsstoffen zurückgeführt werden.

Gemäß einem weiteren Merkmal der Erfindung können die schüttfähigen Güter vor dem Abkühlen im Rohrbündelwärmetauscher befettet werden. Eine weitere Alternative besteht darin, daß die schüttfähigen Güter nach dem Abkühlprozeß in einem konventionellen Kühler oder dem Rohrbündelwärmetauscher in einem zweiten nachgeschalteten Rohrbündelwärmetauscher erwärmt werden und dann anschließend gefettet werden. Hierdurch kann die zugegebene Fettmenge erhöht werden, ohne daß die mechanischen Eigenschaften der Pellets zu stark negativ beeinflußt werden. Ein weiterer Effekt dieses Prozeßschrittes ist die Reduktion von Staubbildung während der weiteren Lager- und Transportschritte.

Vorrichtungsseitig wird zur Lösung der Aufgabe vorgeschlagen eine Vorrichtung zur Durchführung des Verfahrens gemäß vorgenannter Merkmale mit einer Aufgabestation für die mittels Dampf vorkonditionierten Ausgangsstoffe, einer Güterpresse, vorzugsweise Pelletierpresse, sowie einem Wärmetauscher, dadurch gekennzeichnet, daß der Wärmetauscher ein schüttgutfähiger Rohrbündelwärmetauscher ist.

Die Verwendung eines schüttgutfähigen Rohrbündelwärmetauschers ist insofern von Vorteil, als daß die Abkühlung der schüttfähigen Güter auf indirektem Wege erfolgen kann. Zum Abtransport der während der Abkühlung der schüttfähigen Güter entstehenden Stäube bzw. des entstehenden Wasserdampfes werden die Rohre des Rohrbündelwärmetauschers im Gegenstrom mit einem Gas beaufschlagt, das als Trägergas dient und die im Zuge der Abkühlung der schüttfähigen Güter entstehenden Stäube bzw. den entstehenden Wasserdampf aufnimmt. Die erfindungsgemäße Vorrichtung erlaubt insofern eine Kombination aus einem direkten und einem indirekten Kühlungsverfahren, wobei sie die Vorteile des direkten Kühlungsverfahrens nutzt, ohne daß ihr die damit einhergehenden Nachteile anhaften.

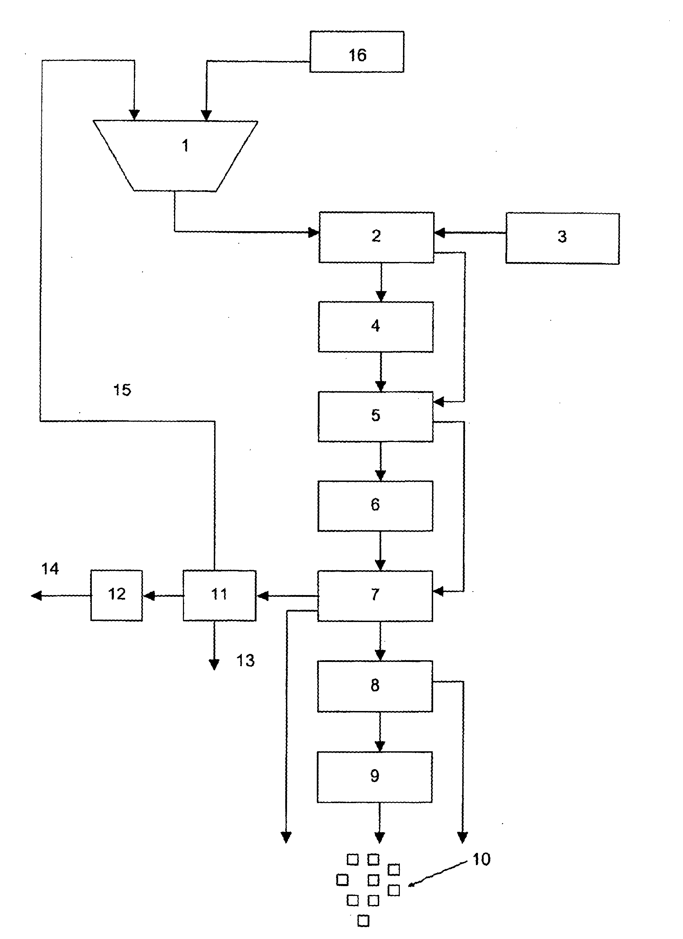

Weitere Merkmale und Vorteile der Erfindung ergeben sich aus der nachfolgenden Beschreibung anhand der Fig. 1. Diese stellt in einem schematischen Ablaufdiagramm das erfindungsgemäße Verfahren dar.

In einem Bunker 1 befinden sich die Ausgangsstoffe 16. Diese liegen als Mehlmischung vor. Die Ausgangsstoffe 16 werden ausgehend vom Bunker 1 einem Konditionierer 2 aufgegeben. Hier werden sie mit Dampf 3 und/oder Flüssigkeiten beaufschlagt. Die konditionierten Ausgangsstoffe 16 gelangen sodann über einen Vorverdichter 4 (Presse, Expander, Vorkomprimierer oder ähnliches) oder direkt zu einer Pelletierpresse 5. Hier werden die Ausgangsstoffe 16 zu Pellets, das heißt schüttfähigen Gütern verpreßt. Die heißen Pellets können nach der Pelletierpresse 5 entweder über eine Befettungsstation 6 zu einem Rohrbündelwärmetauscher 7 oder aber direkt in den Rohrbündelwärmetauscher 7 geführt werden.

Im Rohrbündelwärmetauscher 7 werden die schüttfähigen Güter gekühlt. Dies wird dadurch erreicht, daß die aus der Pelletierpresse 5 kommenden, noch heißen Pellets im Rohrbündelwärmetauscher 7 abgekühlt werden. Zu diesem Zweck wird der Rohrbündelwärmetauscher 7 im Kreuz-Gegenstrom mit einem Kühlmittel, beispielsweise Wasser, betrieben. Dabei kann das Kühlmedium in einem geschlossenen Strömungskreislauf geführt werden, so daß die vom Kühlmedium aufgenommene Wärme zurückgewonnen werden kann.

Infolge der Abkühlung geben die Pellets Wasser in Form von Wasserdampf ab. Dieser bei der Abkühlung entstehende Wasserdampf wird mittels eines Gases, vorzugsweise Luft, das durch die Rohre des Rohrbündelwärmetauschers 7 als Trägergas im Gegenstrom geführt wird, abtransportiert. Zudem dient dieses Gas dazu, die im Rahmen des Trocknungsvorganges entstehenden Stäube gleichfalls aufzunehmen und abzutransportieren. Das Gas, welches als Abluft den Röhrenwärmetauscher 7 verläßt, wird im weiteren einer Reinigungsvorrichtung 11 zugeführt. In dieser Reinigungsvorrichtung 11 wird die Abluft entfeuchtet und entstaubt. Die aus der Abluft durch Entstaubung entfernten Feststoffpartikel 15 können wiederverwendet und beispielsweise dem Bunker 1 zugeführt werden. Der durch die Entfeuchtung der Abluft entzogene Wasserdampf 13 wird aus der Reinigungseinrichtung gleichfalls abgezogen und kann gegebenenfalls wiederverwendet werden. Die entfeuchtete und entstaubte Abluft 14 kann zur Geruchsneutralisierung durch einen Geruchsfilter 12 geführt und alsdann an die Atmosphäre abgegeben werden.

Die den Rohrbündelwärmetauscher 7 verlassenden Pellets können alternativ über eine Befettungsstation 8 oder Granulierstation 9 oder direkt abgeführt werden, so daß am Ende Pellets, befettete Pellets oder Granulat zur Verfügung stehen. Die Befettungsstation 8 weist gegebenenfalls einen Rohrbündelwärmetauscher zum Erwärmen der schüttfähigen Güter sowie eine Befettungseinrichtung auf. In der Befettungsstation 8 wird der Rohrbündelwärmetauscher in diesem Fall für eine Produkterwärmung genutzt und vorzugsweise mit einem Gas oder einer Flüssigkeit im Gleichstrom beaufschlagt. Ziel ist in diesem Fall, die Pellets auf eine Temperatur von ca. 40°C (+- 10°C) aufzuheizen, um dem aufgesprühten Medium (Fett oder Öl) das Eindringen in den Pellet zu erleichtern und ein Verstocken auf der Oberfläche zu verhindern.

Die Besonderheit des vorbeschriebenen Verfahrens ist die im Rohrbündelwärmetauscher 7 durchgeführte Kühlung, Entfeuchtung und Entstaubung der aus der Pelletierpresse 5 kommenden Pellets und die alternative Aufheizung im Rohrbündelwärmetauscher mit dem Ziel, Fett oder Öl besser auf dier Pellets aufbringen zu können.

Das erfindungsgemäße Verfahren eignet sich insbesondere zur Herstellung pelletierter oder granulierter Produkte, die aus gemahlenen/strukturierten Mischungen aus zugelassenen Einsatzstoffen für die Tierernährung erzeugt werden. Die hergestellte Pelletgröße kann dabei in einem Bereich zwischen ungefähr 2 bis 8 mm variieren. Der Temperaturbereich des Mehls bzw. der Mehlmischung liegt vorzugsweise zwischen ungefähr 15°C bis ungefähr 35°C, eine Verarbeitung von Mehlen bzw. Mehlmischungen anderer Temperatur ist allerdings ebenfalls möglich. Nach dem Kondentionierer 2 weist das Mehl bzw. die Mehlmischung vorzugsweise eine Temperatur zwischen ungefähr 45°C und ungefähr 65°C auf. Als besonders vorteilhaft hat sich herausgestellt, das Verfahren so zu fahren, daß die in der Pelletierpresse 5 erzeugten schüttfähigen Güter nach der Pelletierpresse 5 in einer Temperatur zwischen ungefähr 55°C bis ungefähr 90°C vorliegen. Durch ein Abkühlen der Güter im Rohrbündelwärmetauscher 7 wird deren Temperatur vorzugsweise auf eine Temperatur in einem Bereich zwischen ungefähr 15°C bis ungefähr 30°C eingestellt. Die in den Pellets nach dem Rohrbündelwärmetauscher 7 vorliegende Feuchtigkeit beträgt vorzugsweise ungefähr 10 % bis ungefähr 14 %.

### Bezugszeichenliste

- 1: Bunker
- 2: Konditionierer
- 3: Sattdampf
- 4: Vorverdichter (Pelletierpresse, Expander, Extruder, BOA)
- 5: Pelletierpresse
- 6: Befettungsstation
- 7: Rohrbündelwärmetauscher
- 8: Befettungsstation
- 9: Granulierstation
- 10: Endprodukt
- 11: Reinigungsvorrichtung
- 12: Geruchsfilter
- 13: Wasserdampf
- 14: Abluft
- 15: Feststoffpartikel
- 16: Ausgangsstoffe

## Patentansprüche

1. Verfahren zur Herstellung von Zwischenfutterprodukten und/oder Mischfutterfertigprodukten für Tiere, bei dem mittels Dampf, vorzugsweise mittels Sattdampf (3) vorkonditionierte Ausgangsstoffe (16) zu schüttfähigen Gütern, vorzugsweise Pellets, gepreßt und anschließend die schüttfähigen Güter abgekühlt werden,
**dadurch gekennzeichnet,**
**daß** die Abkühlung der schüttfähigen Güter auf indirektem Weg erfolgt, zu welchem Zweck die schüttfähigen Güter durch einen mit Wasser als Kühlmedium betriebenen Rohrbündelwärmetauscher (7) geführt werden, wobei zum Abtransport des infolge der Abkühlung der schüttfähigen Güter entstehenden Wasserdampfes die Rohre des Rohrbündelwärmetauschers (7) im Gegenstrom mit einem Gas als Trägergas beaufschlagt werden.

2. Verfahren nach Anspruch 1, **dadurch gekennzeichnet, daß** das im Gegenstrom durch die Rohre des Rohrbündelwärmetauschers (7) geführte Gas nach einem Verlassen des Rohrbündelwärmetauschers (7) entfeuchtet und/oder gereinigt, vorzugsweise entstaubt wird.

3. Verfahren nach Anspruch 2, **dadurch gekennzeichnet, daß** die aus den Gas im Zuge der Reinigung entfernten Feststoffpartikel (15) den Ausgangsstoffen (16) beigegeben werden.

4. Verfahren nach einem der vorhergehenden Ansprüche, **dadurch gekennzeichnet, daß** die Ausgangsstoffe (16) vor einem Pressen der schüttfähigen Güter vorverdichtet werden.

5. Verfahren nach einem der vorhergehenden Ansprüche, **dadurch gekennzeichnet, daß** die schüttfähigen Güter vor und/oder nach dem Abkühlen im Rohrbündelwärmetauscher (7) befettet werden.

6. Verfahren nach einem der vorhergehenden Ansprüche, **dadurch gekennzeichnet, daß** die schüttfähigen Güter nach einem Verlassen des Rohrbündelwärmetauschers (7) zu Granulat weiterverarbeitet werden.

7. Vorrichtung zur Durchführung des Verfahrens nach einem der vorhergehenden Ansprüche 1 bis 6 mit einer Aufgabestation für die mittels Sattdampf (3) vorkonditionierten Ausgangsstoffe (16), einer Güterpresse, vorzugsweise Pelletierpresse, sowie einem Wärmetauscher, **dadurch gekennzeichnet, daß** der Wärmetauscher ein schüttgutfähiger Rohrbündelwärmetauscher (7) ist.

8. Vorrichtung nach Anspruch 7, **dadurch gekennzeichnet, daß** der Güterpresse (5) eine Vorverdichterpresse (4) vorgeschaltet ist.

9. Vorrichtung nach Anspruch 7 oder 8, **dadurch gekennzeichnet, daß** dem Rohrbündelwärmetauscher (7) eine Befettungsstation (6, 8) vor- und/oder nachgeschaltet ist.

10. Vorrichtung nach einem der vorhergehenden Ansprüche 7 bis 9, **gekennzeichnet durch** eine Reinigungseinrichtung (11) zur Reinigung des im Gegenstrom **durch** den Rohrbündelwärmetauscher (7) geführten Gases.

## Claims

1. A process for producing premixes and/or ready-made compound feed products for animals, wherein starting materials (16) pre-conditioned with steam, preferably with saturated steam (3), are pressed to form free-flowing commodities, preferably pellets, and then the free-flowing commodities are cooled, **characterized in that** cooling of the free-flowing commodities is carried out in an indirect manner; to this end, the free-flowing commodities are fed through a shell and tube heat exchanger (7) operating with water as the coolant, wherein in order to remove the water vapour produced following cooling of the free-flowing commodities, a gas acting as a carrier gas is admitted into the tubes of the shell and tube heat exchanger (7) as a counter-current.

2. The process according to claim 1, **characterized in that** the gas fed as a counter-current through the tubes of the shell and tube heat exchanger (7) is dehumidified and/or cleaned, preferably freed from dust, after leaving the shell and tube heat exchanger (7).

3. The process according to claim 2, **characterized in that** the solid particles (15) removed from the gas during the course of cleaning are added to the starting materials (16).

4. The process according to one of the preceding claims, **characterized in that** the starting materials (16) are precompressed before pressing the free-flowing commodities.

5. The process according to one of the preceding claims, **characterized in that** fat is added to the free-flowing commodities before and/or after cooling in the shell and tube heat exchanger (7).

6. The process according to one of the preceding claims, **characterized in that** the free-flowing commodities are processed further to form granulate after leaving the shell and tube heat exchanger (7).

7. A device for carrying out the process according to one of claims 1 to 6, comprising a loading station for the starting materials (16) pre-conditioned with saturated steam (3), a commodities press, preferably a pelleting press, as well as a heat exchanger, **characterized in that** the heat exchanger is a shell and tube heat exchanger (7) that can accommodate free-flowing goods.

8. The device according to claim 7, **characterized in that** the commodities press (5) is connected upstream of a precompressor(4).

9. The device according to claim 7 or claim 8, **characterized in that** a station (6, 8) for adding fat is connected upstream and/or downstream of the shell and tube heat exchanger (7).

10. The device according to one of the preceding claims 7 to 9, **characterized by** a cleaning apparatus (11) for cleaning the gas fed as a counter-current through the shell and tube heat exchanger (7).

## Revendications

1. Procédé de fabrication de produits fourragers intermédiaires et/ou de produits fourragers mixtes finis destinés aux animaux lors duquel, au moyen de vapeur, de préférence au moyen de vapeur saturée (3) on compresse des matières premières (16) préconditionnées en produits en vrac, de préférence en billettes et on fait refroidir ensuite les produits en vrac, **caractérisé en ce que**
le refroidissement des produits en vrac s'effectue par voie indirecte, à laquelle fin les produits en vrac sont conduits à travers un échangeur thermique à faisceau tubulaire (7) fonctionnant à l'eau en tant que milieu de refroidissement, pour l'évacuation de la vapeur d'eau générée suite au refroidissement des produits en vrac, les tubes de l'échangeur thermique à faisceau tubulaire (7) étant soumis dans le contre-courant à un gaz en tant que gaz vecteur.

2. Procédé selon la revendication 1, **caractérisé en ce que** le gaz conduit dans le contre-courant à travers les tubes de l'échangeur thermique à faisceau tubulaire (7) est déshumidifié et/ou épuré, de préférence dépoussiéré après avoir quitté l'échangeur thermique à faisceau tubulaire (7).

3. Procédé selon la revendication 2, **caractérisé en ce que** les particules de matières solides (15) retirées du gaz au cours de son épuration sont ajoutées aux matières premières (16).

4. Procédé selon l'une quelconque des revendications précédentes, **caractérisé en ce que** les matières premières (16) sont précompactées avant une compression des produits en vrac.

5. Procédé selon l'une quelconque des revendications précédentes, **caractérisé en ce que** les produits en vrac sont graissés avant et/ou après le refroidissement dans l'échangeur thermique à faisceau tubulaire (7) .

6. Procédé selon l'une quelconque des revendications précédentes, **caractérisé en ce que**, après avoir quitté l'échangeur thermique à faisceau tubulaire (7), les produits en vrac sont mis en oeuvre ultérieurement pour leur donner la forme de granulés.

7. Dispositif pour la réalisation du procédé selon l'une quelconque des revendications précédentes 1 à 6, avec un poste d'alimentation pour les matières premières (16) préconditionnées au moyen de vapeur saturée (3), une presse à produits, de préférence une presse à pellets, ainsi qu'avec un échangeur thermique, **caractérisé en ce que** l'échangeur thermique est une échangeur thermique à faisceau tubulaire (7) adapté pour les produits en vrac.

8. Dispositif selon la revendication 7, **caractérisé en ce qu'**une presse de précompactage (4) est montée en amont de la presse à produits (5).

9. Dispositif selon la revendication 7 ou 8, **caractérisé en ce qu'**un poste de graissage (6, 8) est monté en amont et/ou en aval de l'échangeur thermique à faisceau tubulaire (7) .

10. Dispositif selon l'une quelconque des revendications 7 à 9 précédentes, **caractérisé par** un dispositif d'épuration (11) pour épurer le gaz conduit dans le contre-courant à travers l'échangeur thermique à faisceau tubulaire (7).
